# EUROPEAN PATENT APPLICATION

(11) **EP 4 422 280 A1**
(43) Date of publication of application: **28.08.2024**
(21) Application number: 22882644.2
(22) Date of filing: 08.10.2022
(51) Int. Cl.: H04W 40/02, H04W 40/34

(54) **PATH FALLBACK METHOD AND APPARATUS, AND STORAGE MEDIUM**

(30) Priority: 22.10.2021 CN 202111236259
(71) Applicant: Datang Mobile Communications Equipment Co., Ltd., Beijing 100085 (CN)
(72) Inventor: LIU, Ziqiao, Beijing 100085 (CN); CHEN, Li, Beijing 100085 (CN)
(74) Representative: dompatent von Kreisler Selting Werner - Partnerschaft von Patent- und Rechtsanwälten mbB
(86) International application number: PCT/CN2022/123872
(87) International publication number: WO 2023/066034

(57) **Abstract**

The present disclosure provides a path fallback method and apparatus, and a storage medium. The method includes: determining to migrate F1 of an edge IAB node from a target path to a first path, where the first path is a source path or an else path, the source path being a path used by F1 of the edge IAB node before using the target path, and the else path being a path other than the target path and the source path; and transmitting indication information to a target IAB donor and/or the edge IAB node, the indication information being used to give an indication to release or suspend configuration information for transmitting, on the target path, all or part of F 1 of the edge IAB node. The method realizes a path fallback for F1 of the edge IAB node which has been migrated to the target path.

## Description

This disclosure claims priority to Chinese Patent Application No. 202111236259.2, filed to the China National Intellectual Property Administration on October 22, 2021, and entitled "PATH FALLBACK METHOD AND APPARATUS, AND STORAGE MEDIUM", which is hereby incorporated by reference in its entirety.

### TECHNICAL FIELD

The present disclosure relates to the field of communication technology and, in particular, to a path fallback method and apparatus, and a storage medium.

### BACKGROUND

In a multi-hop relay network, data transmission between a user equipment (user equipment, UE) and a donor (donor) base station can pass through one or more relay nodes. In 5G, the multi-hop relay network is also referred to as an integrated access and backhaul (integrated access and backhaul, IAB) network.

In the IAB network, for a load consideration, or based on a measurement report or the like that is reported by an edge IAB node, a source IAB donor can migrate F1 of the edge IAB node from a source path to a target path. However, current related protocols only support the migration, by the source IAB donor, on F1 of the edge IAB node from the source path to the target path, and do not support a fallback for F1 of the edge IAB node which has been migrated to the target path.

### SUMMARY

The present disclosure provides a path fallback method and apparatus, and a storage medium, realizing a path fallback for F 1 of the edge IAB node which has been migrated to the target path.

In a first aspect, an embodiment of the present disclosure provides a path fallback method, including:
determining to migrate F 1 of an edge IAB node from a target path to a first path, where the first path is a source path or an else path, the source path being a path used by F 1 of the edge IAB node before using the target path, and the else path being a path other than the target path and the source path; and
transmitting indication information to a target IAB donor and/or the edge IAB node, the indication information being used to give an indication to release or suspend configuration information for transmitting, on the target path, all or part of F 1 of the edge IAB node.

In an implementation, the transmitting the indication information to the target IAB donor and/or the edge IAB node includes:
transmit a first message to the target IAB donor, the first message being used to give an indication to the target IAB donor to release or suspend first configuration information which is used for transmitting F 1 of the edge IAB node.

In an implementation, the first message is an XnAP message.

In an implementation, the first configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In an implementation, the transmitting the indication information to the target IAB donor and/or the edge IAB node includes:
transmit a second message to the edge IAB node, the second message being used to give an indication to the edge IAB node to release or suspend second configuration information which is used for transmitting, on the target path, F 1 of the edge IAB node.

In an implementation, the second message is an RRC message, and the transmitting the second message to the edge IAB node includes:
transmitting the second message to an MT of the edge IAB node.

In an implementation, the second message is an F1AP message, and the transmitting the second message to the edge IAB node includes:
transmitting the second message to a DU of the edge IAB node.

In an implementation, the second configuration information includes any one or more of the following items:
a backhaul adaptation protocol stack header rewrite table, and an IP address allocated to the edge IAB node by the target IAB donor.

In an implementation, the determining to migrate F1 of the edge IAB node from the target path to the first path includes:
determining, based on at least one item of a load of a source IAB donor, a load of the target IAB donor, a load of a neighboring cell, or a measurement report of the edge IAB node, to migrate F 1 of the edge IAB node from the target path to the first path.

In an implementation, the method further includes:
transmitting an RRC reconfiguration message to the edge IAB node, the RRC reconfiguration message being used for handing over the edge IAB node to an IAB parent node of the first path;
receiving an RRC reconfiguration completion message transmitted by the edge IAB node; and
configuring or activating third configuration information of each node of the first path, the third configuration information being used for transmitting F1 of the edge IAB node.

In an implementation, the transmitting the RRC reconfiguration message to the edge IAB node includes: transmitting the RRC reconfiguration message to the edge IAB node through the IAB parent node of the first path; the receiving the RRC reconfiguration completion message transmitted by the edge IAB node includes: receiving the RRC reconfiguration completion message which is transmitted by the edge IAB node through an IAB parent node of the target path.

In an implementation, the third configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In a second aspect, the present disclosure provides a path fallback apparatus, including a memory, a transceiver and a processor;
where the memory is configured to store a computer program;
the transceiver is configured to receive or transmit data under control of the processor; and
the processor is configured to read the computer program stored in the memory and perform the following operations:
   determining to migrate F1 of an edge IAB node from a target path to a first path, where the first path is a source path or an else path, the source path being a path used by F 1 of the edge IAB node before using the target path, and the else path being a path other than the target path and the source path; and
   transmitting indication information to a target IAB donor and/or the edge IAB node, the indication information being used to give an indication to release or suspend configuration information for transmitting, on the target path, all or part of F 1 of the edge IAB node.

In an implementation, the processor is specifically configured to perform the following operation:
transmitting a first message to the target IAB donor, the first message being used to give an indication to the target IAB donor to release or suspend first configuration information which is used for transmitting F 1 of the edge IAB node.

In an implementation, the first message is an XnAP message.

In an implementation, the first configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In an implementation, the processor is further configured to perform the following operation:
transmitting a second message to the edge IAB node, the second message being used to give an indication to the edge IAB node to release or suspend second configuration information which is used for transmitting, on the target path, F 1 of the edge IAB node.

In an implementation, the second message is an RRC message, and the processor is specifically configured to perform the following operation:
transmitting the second message to an MT of the edge IAB node.

In an implementation, the second message is an F1AP message, and the processor is specifically configured to perform the following operation:
transmitting the second message to a DU of the edge IAB node.

In an implementation, the second configuration information includes any one or more of the following items:
a backhaul adaptation protocol stack header rewrite table, and an IP address allocated to the edge IAB node by the target IAB donor.

In an implementation, the processor is configured to perform the following operation:
determining, based on at least one item of a load of a source IAB donor, a load of the target IAB donor, a load of a neighboring cell, or a measurement report of the edge IAB node, to migrate F 1 of the edge IAB node from the target path to the first path.

In an implementation, the processor is configured to perform the following operations:
transmitting an RRC reconfiguration message to the edge IAB node, the RRC reconfiguration message being used for handing over the edge IAB node to an IAB parent node of the first path;
receiving an RRC reconfiguration completion message transmitted by the edge IAB node; and
configuring or activating third configuration information of each node of the first path, the third configuration information being used for transmitting F 1 of the edge IAB node.

In an implementation, the processor is specifically configured to perform the following operations:
transmitting the RRC reconfiguration message to the edge IAB node through the IAB parent node of the first path; and
receiving the RRC reconfiguration completion message which is transmitted by the edge IAB node through an IAB parent node of the target path.

In an implementation, the third configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In a third aspect, the present disclosure provides a path fallback apparatus, including:
a determining unit, configured to determine to migrate F1 of an edge IAB node from a target path to a first path, where the first path is a source path or an else path, the source path being a path used by F 1 of the edge IAB node before using the target path, and the else path being a path other than the target path and the source path; and
a transmitting unit, configured to transmit indication information to a target IAB donor and/or the edge IAB node, the indication information being used to give an indication to release or suspend configuration information for transmitting, on the target path, all or part of F 1 of the edge IAB node.

In an implementation, the transmitting unit is configured to:
transmit a first message to the target IAB donor, the first message being used to give an indication to the target IAB donor to release or suspend first configuration information which is used for transmitting F 1 of the edge IAB node.

In an implementation, the first message is an XnAP message.

In an implementation, the first configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In an implementation, the transmitting unit is configured to:
transmit a second message to the edge IAB node, the second message being used to give an indication to the edge IAB node to release or suspend second configuration information which is used for transmitting, on the target path, F 1 of the edge IAB node.

In an implementation, the second message is an RRC message, and the transmitting unit is configured to:
transmit the second message to an MT of the edge IAB node.

In an implementation, the second message is an F1AP message, and the transmitting unit is configured to:
transmit the second message to a DU of the edge IAB node.

In an implementation, the second configuration information includes any one or more of the following items:
a backhaul adaptation protocol stack header rewrite table, and an IP address allocated to the edge IAB node by the target IAB donor.

In an implementation, the determining unit is configured to:
determine, based on at least one item of a load of a source IAB donor, a load of the target IAB donor, a load of a neighboring cell, or a measurement report of the edge IAB node, to migrate F 1 of the edge IAB node from the target path to the first path.

In an implementation, the transmitting unit is configured to: transmit an RRC reconfiguration message to the edge IAB node, the RRC reconfiguration message being used for handing over the edge IAB node to an IAB parent node of the first path;
the apparatus further includes: a receiving unit, configured to receive an RRC reconfiguration completion message transmitted by the edge IAB node;
the determining unit is configured to configure or activate third configuration information of each node of the first path, the third configuration information being used for transmitting F 1 of the edge IAB node.

In an implementation, the transmitting unit is configured to: transmit the RRC reconfiguration message to the edge IAB node through the IAB parent node of the first path; and
the receiving unit is configured to: receive the RRC reconfiguration completion message which is transmitted by the edge IAB node through an IAB parent node of the target path.

In an implementation, the third configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In a fourth aspect, the present disclosure provides a computer readable storage medium, storing thereon a computer program, where the computer program is configured to enable a computer to implement the method according to the first aspect and any implementation thereof.

In a fifth aspect, the present disclosure provides a computer program product, including a computer program, where the computer program, when being executed by a processor, implements the method according to the first aspect and any implementation thereof.

The present disclosure provides a path fallback method and apparatus, and a storage medium. In the method, a source IAB donor, after migrating F1 of an edge IAB node from a source path to a target path, can further perform a fallback for F1 of the edge IAB node which has been migrated to the target path, to migrate F1 of the edge IAB node back to the source path or an else path, and give an indication to a target IAB donor and/or the edge IAB node to release or suspend configuration information for transmitting, on the target path, all or part of F1 of the edge IAB node, thereby realizing a path fallback for F1.

It should be understood that the content described in the foregoing summary section is neither intended to limit key or important features of embodiments of the present invention, nor is used to limit the scope of the present invention. Other features of the present invention will become readily comprehensible through the following description.

### BRIEF DESCRIPTION OF DRAWINGS

FIG. 1 is a schematic structural diagram of an IAB network according to an embodiment of the present disclosure.
FIG. 2 is a schematic diagram of a source path and a target path according to an embodiment of the present disclosure.
FIG. 3 is a first schematic flowchart of a path fallback method according to an embodiment of the present disclosure.
FIG. 4 is a second schematic flowchart of a path fallback method according to an embodiment of the present disclosure.
FIG. 5 is a first schematic structural diagram of a path fallback apparatus according to an embodiment of the present disclosure.
FIG. 6 is a second schematic structural diagram of a path fallback apparatus according to an embodiment of the present disclosure.

### DESCRIPTION OF EMBODIMENTS

The term "and/or" in the present disclosure describes an association relationship of associated objects, indicating that there can be three relationships, for example, A and/or B can indicate that A exists alone, A and B exist at the same time, and B exists alone. The character "/" generally indicates that the context objects are in an "or" relationship. In the embodiments of the present application, the term "a plurality of" refers to two or more, other quantifiers are similar thereto.

The technical solutions according to the embodiments of the present disclosure will be described hereunder clearly and comprehensively in conjunction with the accompanying drawings in the embodiments of the present disclosure. Apparently, the described embodiments are merely some of, rather than all of the embodiments of the present disclosure. Based on the embodiments in the present disclosure, all other embodiments obtained by those of ordinary skill in the art without creative efforts shall fall within the protection scope of the present disclosure.

The embodiments of the present disclosure provide a path fallback method and apparatus which, in a scenario where a source IAB donor has migrated F1 of an edge IAB node from a source path to a target path, realize a path fallback for F 1 of the edge IAB node which has been migrated to the target path. The method and apparatus are based on a same inventive concept. Since the problem-solving principle for the method is similar to that for the apparatus, cross reference can be made between the implementations of the apparatus and the method, and repetitions will not be elaborated.

The technical solutions provided in the embodiments of the present disclosure can be applied to various systems, especially a 5G system. For example, an applicable system can be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX), 5G new radio (New Radio, NR), and so on. Each of these various systems includes therein a terminal device and a network device. The system can further include a core network part such as an evolved packet system (Evolved Packet System, EPS), a 5G System (5GS) or the like.

A terminal device related to embodiments of the present disclosure, can refer to a device that provides voice and/or data connectivity to a user, a handheld device with a wireless connectivity function, or other processing devices connected to a wireless modem. In different systems, the terminal device may vary in name. For example, in a 5G system, the terminal device can be referred to as a user equipment (User Equipment, UE). A wireless terminal device can communicate with one or more core networks (Core Network, CN) through a radio access network (Radio Access Network, RAN). The wireless terminal device can be a mobile terminal device such as a mobile phone (or referred to as a "cellular" phone) and a computer with a mobile terminal device, for example, it can be a mobile apparatus which is portable, pocket-sized, handheld, built-in a computer or vehicle-mounted, and exchanges voice and/or data with the radio access network. For example, a personal communication service (Personal Communication Service, PCS) phone, a cordless phone, a session initiated protocol (Session Initiated Protocol, SIP) phone, wireless local loop (Wireless Local Loop, WLL) station, a personal digital assistant (Personal Digital Assistant, PDA), or the like. The wireless terminal device can also be referred to as a system, a subscriber unit (subscriber unit), a subscriber station (subscriber station), a mobile station (mobile station), a mobile platform (mobile), a remote station (remote station), an access point (access point), a remote terminal device (remote terminal), an access terminal device (access terminal), a user terminal device (user terminal), a user agent (user agent), a user device (user device), which is not limited in the embodiments of the present disclosure.

A base station related to the embodiments of the present disclosure can include multiple cells that provide services to the terminal. Depending on the specific application scenarios, a base station can also be referred to as an access point or a device in an access network that communicates with a wireless terminal device through one or more sectors on an air interface, or any other names. For example, the base station related to the embodiments of the present disclosure can be an evolutional network device (evolutional Node B, eNB or e-NodeB) in a long term evolution (long term evolution, LTE) system, a 5G base station (gNB) in a 5G network architecture (next generation system), a home evolved Node B (home evolved Node B, HeNB), a relay node (relay node), a femto (femto), a pico (pico) or the like, which is not limited in the embodiments of the present disclosure. In some network structures, the base station can include a centralized unit (centralized unit, CU) node and a distributed unit (distributed unit, DU) node, where the centralized unit and the distributed unit can be arranged geographically separated.

Each of the base station and the terminal device can use one or multiple antennas for Multi Input Multi Output (Multi Input Multi Output, MIMO) transmission, where the MIMO transmission can be Single User MIMO (Single User MIMO, SU-MIMO) or Multiple User MIMO (Multiple User MIMO, MU-MIMO). Depending on the pattern and quantity of antennas, MIMO transmission can be 2D-MIMO, 3D-MIMO, FD-MIMO, or massive-MIMO, it can also be diversity transmission, precoded transmission, beamforming transmission, or the like.

Firstly, an IAB network will be introduced in the following.

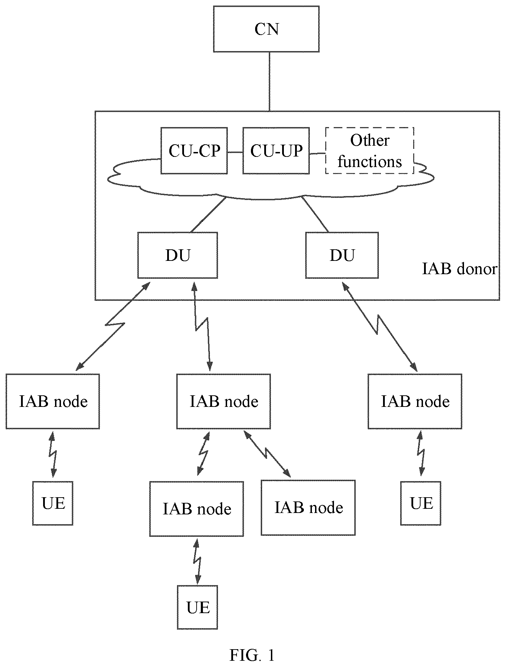

As shown in FIG. 1, the IAB network consists of an IAB donor, IAB nodes, and UEs. The IAB donor includes two parts: an IAB donor CU and an IAB donor DU. There can be multiple IAB donor DUs under one IAB donor CU. An IAB node consists of two parts: an IAB node DU and an IAB node mobile termination (mobile termination, MT). The IAB node DU is connected to the IAB donor CU through an F1 interface, and the IAB node MT is connected to a downstream IAB node DU or UE through a Uu interface.

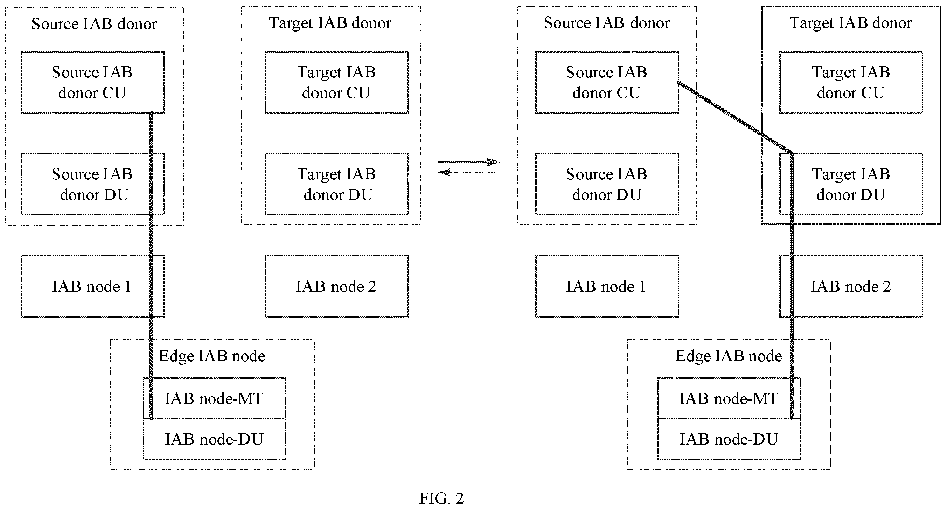

For a load consideration, or based on a measurement report or the like that is reported by an edge IAB node, the source IAB donor can migrate F1 of the edge IAB node from a source path to a target path. Exemplarily, as shown in FIG. 2, the source path is the path through the source IAB donor CU, the source IAB donor DU, the IAB node 1 and the edge IAB node; and the target path is the path through the source IAB donor CU, the target IAB donor DU, the IAB node 2 and the edge IAB node. According to current related protocols, the source IAB donor CU can offload (offload) (namely, migrate) F 1 of the edge IAB node from the source path to the target path. However, a further fallback for F1 of the edge IAB node which has been migrated to the target path is not supported.

Therefore, it is proposed in the embodiments of the present disclosure that, the source IAB donor CU, after migrating F 1 of the edge IAB node from the source path to the target path, can further perform a fallback for F 1 of the edge IAB node which has been migrated to the target path, to migrate F1 of the edge IAB node back to the source path or an else path, and give an indication to the target IAB donor and/or the edge IAB node to release or suspend configuration information for transmitting, on the target path, all or part of F 1 of the edge IAB node. In the following, the path fallback method according to the present disclosure will be explained in detail through specific embodiments. It should be understood that, the following specific embodiments can be combined with each other, for the same or similar concepts or processes, description may not be repeated in some embodiments.

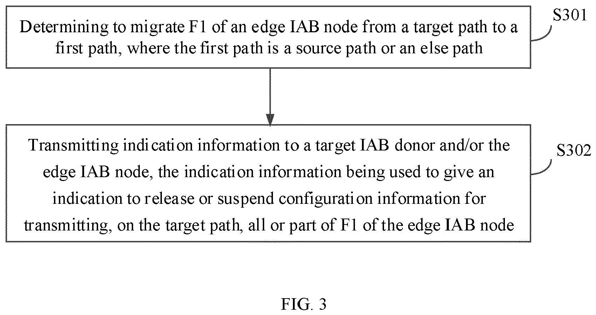

FIG. 3 is a first schematic flowchart of a path fallback method according to an embodiment of the present disclosure. The method is applied to a source IAB donor. As shown in FIG. 3, the method includes:
S301, determining to migrate F1 of an edge IAB node from a target path to a first path.

The first path is a source path or an else path, the source path being a path used by F1 of the edge IAB node before using the target path, and the else path being a path other than the target path and the source path.

The source IAB donor, after migrating F 1 of the edge IAB node from the source path to the target path, can determine, based on at least one item of a load of the source IAB donor, a load of the target IAB donor, a load of a neighboring cell, or a measurement report of the edge IAB node, to migrate F 1 of the edge IAB node from the target path to the first path, namely, to perform a path fallback for F1 of the edge IAB node. F 1 in this fallback scenario is offload traffic (offload traffic), which has been offloaded from the source path to the target path, and which can include F1-C, F1-U, non-F1 traffic, or the like.

In an implementation, the source IAB donor itself does not have a significant load and it is no longer necessary to offload F 1 of the edge IAB node to the target path, then the source IAB donor can migrate F 1 of the edge IAB node from the target path back to the source path. As an example, if the load of the source IAB donor is less than a first threshold, it is determined to migrate F1 of the edge IAB node from the target path to the source path.

In an implementation, the source IAB donor determines that the target IAB donor has an excessive load and cannot support F 1 that has been offloaded to the target path, then the source IAB donor can migrate F 1 of the edge IAB node from the target path back to the source path or the else path. As an example, the source IAB donor CU can receive an XnAP message (resource status response, or other new XnAP messages) transmitted by the target IAB donor, to determine that the target IAB donor has an excessive load. As an example, if the load of the target IAB donor is greater than a second threshold, it is determined to migrate F1 of the edge IAB node from the target path to the first path. When it is determined to migrate F1 of the edge IAB node from the target path to the else path, the else path can be determined with reference to the load of a neighboring cell.

In an implementation, the measurement report reported by the source IAB donor indicates that signal quality of the target path is poor while signal quality of the first path is good, then the source IAB donor can migrate F 1 of the edge IAB node from the target path to the first path. As an example, the measurement report of the edge IAB node indicates that the signal quality of the target path is less than a third threshold and/or the signal quality of the first path is greater than a fourth threshold, then it is determined to migrate F1 of the edge IAB node from the target path to the first path.

It should be noted that the source IAB donor can determine to migrate F1 of the edge IAB node from the target path to the first path based on a combination of multiple items of the load of the source IAB donor, the load of the target IAB donor, the load of a neighboring cell, or the measurement report of the edge IAB node.

S302, transmitting indication information to a target IAB donor and/or the edge IAB node, the indication information being used to give an indication to release or suspend configuration information for transmitting, on the target path, all or part of F1 of the edge IAB node.

When the source IAB donor determines to migrate F 1 of the edge IAB node from the target path to the first path, the source IAB donor gives an indication to the target IAB donor and/or the edge IAB donor to release or suspend the configuration information for transmitting, on the target path, all or part of F1 of the edge IAB node.

Optionally, the source IAB donor gives an indication to the target IAB donor and/or the edge IAB donor to release or suspend the configuration information for transmitting, on the target path, all of F1 of the edge IAB node. It should be understood that releasing or suspending the configuration information for transmitting, on the target path, all of F1 of the edge IAB node, means releasing all of the offload traffic. For example, the indication information is an All Traffic Indication (All Traffic Indication) which is used for releasing all of the offload traffic. Optionally, the source IAB donor gives an indication to the target IAB donor and/or the edge IAB donor to release or suspend the configuration information for transmitting, on the target path, part of F1 of the edge IAB node. It should be understood that releasing or suspending the configuration information for transmitting, on the target path, part of F 1 of the edge IAB node, means releasing part of the offload traffic. For example, the indication information is Traffic to Be Released Information (Traffic to Be Released Information) which is used for releasing indicated part of the offload traffic.

When the source IAB donor give an indication to the target IAB donor to release the configuration information for transmitting, on the target path, all or part of F 1 of the edge IAB node, the target IAB donor can use a resource associated with such configuration information for transmitting other F1, thereby improving resource utilization. When the source IAB donor gives an indication to the target IAB donor to suspend the configuration information for transmitting, on the target path, all or part of F1 of the edge IAB node, the target IAB donor temporarily stores such configuration information without further use. When the source IAB donor needs to migrate F1 of the edge IAB node to the target path again, the configuration information can be quickly activated to enable a quick migration.

The source IAB donor gives an indication to the edge IAB node to release the configuration information for transmitting, on the target path, all or part of F1 of the edge IAB node, it is possible to prevent the edge IAB node from storing unnecessary information. When the source IAB donor gives an indication to the edge IAB node to suspend the configuration information for transmitting, on the target path, all or part of F1 of the edge IAB node, the edge IAB node temporarily stores such configuration information, such that, in case the source IAB donor needs to migrate F1 of the edge IAB node to the target path again, the information carried in a reconfiguration process of the edge IAB node following the further migration from the source path to the target path can be reduced.

In the path fallback method according to the embodiments of the present disclosure, the source IAB donor, after migrating F1 of the edge IAB node from the source path to the target path, can further perform a fallback for F1 of the edge IAB node which has been migrated to the target path, to migrate F1 of the edge IAB node back to the source path or an else path, and give an indication to the target IAB donor and/or the edge IAB node to release or suspend configuration information for transmitting, on the target path, all or part of F1 of the edge IAB node, thereby realizing a path fallback for F1.

Based on the foregoing embodiments, further explanations are made regarding the source IAB donor migrating F1 of the edge IAB node from the target path to the source path or an else path, and giving an indication to the target IAB donor and/or the edge IAB node to release or suspend the configuration information.

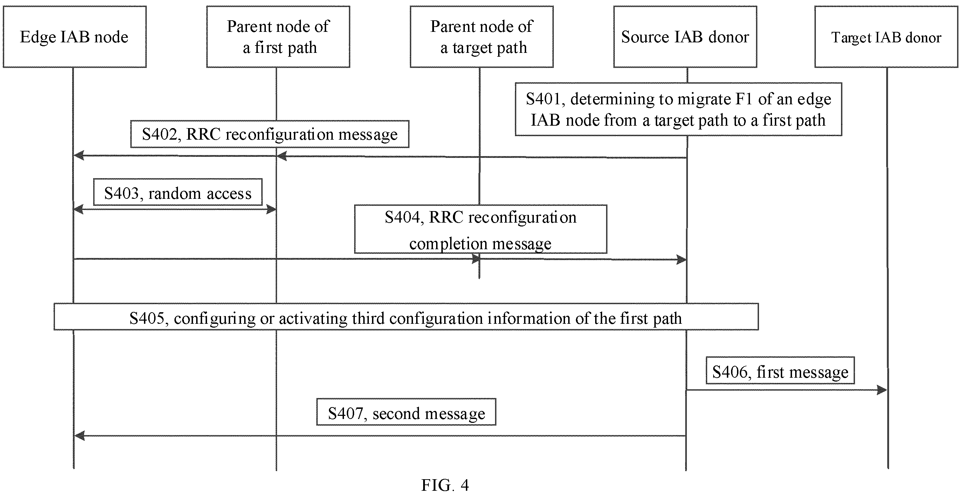

With reference to FIG. 4, the path fallback method includes:
S401, a source IAB donor determines to migrate F1 of an edge IAB node from a target path to a first path.

This step is similar to S301 in the foregoing embodiment, which will not be repeated here.

S402, the source IAB donor transmits an RRC reconfiguration message to the edge IAB node, the RRC reconfiguration message being used for handing over the edge IAB node to an IAB parent node of the first path.

After the source IAB donor determines to migrate F1 of the edge IAB node from the target path to the first path, the source IAB donor needs to hand over the edge IAB node to the IAB parent node of the first path, where the IAB parent node refers to an upstream node of the edge IAB node.

This process can be achieved through an RRC reconfiguration message. Optionally, the source IAB donor can transmit the RRC reconfiguration message to the edge IAB node through the IAB parent node of the first path.

Take an example where the source IAB donor determines to migrate F1 of the edge IAB node from the target path to the source path, with reference to FIG. 2, the source IAB donor needs to hand over the edge IAB node to the IAB parent node of the source path, namely, the IAB node 1. The source IAB donor transmits the RRC reconfiguration message to the IAB node 1, and then the IAB node 1 transmits it to the edge IAB node.

S403, the edge IAB node performs random access to the IAB parent node of the first path.

Still take an example where the first path is the source path, the edge IAB node performs random access to the IAB node 1. It should be noted that the timing of random access can be determined based on a practical situation, and is not limited to immediate random access after the edge IAB node receives the RRC reconfiguration message, which is only provided as an example in the embodiment of the present disclosure.

S404, the edge IAB node transmits an RRC reconfiguration completion message to the source IAB donor.

Optionally, the edge IAB node transmits the RRC reconfiguration completion message to the source IAB donor through the IAB parent node of the target path. Namely, the source IAB donor receives the RRC reconfiguration completion message which is transmitted by the edge IAB node through the IAB parent node of the target path. With reference to FIG. 2, the edge IAB node transmits the RRC reconfiguration completion message to the IAB node 2, and then the IAB node 2 transmits the RRC reconfiguration completion message to the source IAB donor.

S405, configuring or activating third configuration information of each node of the first path, the third configuration information being used for transmitting F1 of the edge IAB node.

To achieve the transmission of F1 of the edge IAB node on the first path, corresponding configuration is required. Still take an example where the first path is the source path, when the source IAB donor migrates F1 of the edge IAB node from the source path to the target path, if the third configuration information of each node on the source path is deleted, reconfiguration is required, and if the third configuration information is suspended, only activation is required. Thereby, the migration of F1 of the edge IAB node back to the source path is achieved.

Optionally, the third configuration information includes any one or more of the following items:
backhaul adaptation protocol stack (Backhaul Adaptation Protocol, BAP) routing (routing) configuration, a backhaul radio link control channel (backhaul radio link control channel, BH RLC channel), IP to Layer 2 (IP to L2) mapping, mapping between an ingress backhaul radio link control channel (ingress BH RLC channel) and an egress backhaul radio link control channel (egress BH RLC channel), and an IP address allocated to the edge IAB node by the target IAB donor.

Among them, the IP to L2 mapping is used to map F1 to a BH RLC channel; the mapping between the ingress BH RLC channel and the egress BH RLC channel refers to mapping between the ingress BH RLC channel and the egress BH RLC channel when data passes through an IAB node; and the BAP routing configuration is a BAP routing ID for F 1, which consists of a path ID and a destination BAP address, used for determining a next hop.

S406, the source IAB donor transmits a first message to the target IAB donor, the first message being used to give an indication to the target IAB donor to release or suspend first configuration information which is used for transmitting all or part of F 1 of the edge IAB node.

Optionally, the first message is an XnAP message.

Optionally, the first configuration information includes any one or more of the following items:
IP to L2 mapping, mapping between an ingress BH RLC channel and an egress BH RLC channel, BAP routing configuration, an IP address allocated to the edge IAB node by the target IAB donor, and a BH RLC channel.

Optionally, through an XnAP message, the source IAB donor gives an indication to the target IAB donor CU to release or suspend the first configuration information. Subsequently, the target IAB donor CU transmits an F1AP message to the target IAB donor DU, to give an indication to the target IAB donor DU to release or suspend the first configuration information.

S407, the source IAB donor transmits a second message to the edge IAB node, the second message being used to give an indication to the edge IAB node to release or suspend second configuration information which is used for transmitting, on the target path, all or part of F1 of the edge IAB node.

Optionally, the second message is an RRC message, and the source IAB donor transmits the second message to an MT of the edge IAB node, to give an indication to the edge IAB node to release or suspend the second configuration information.

Optionally, the second message is an F1AP message, and the source IAB donor transmits the second message to a DU of the edge IAB node, to give an indication to the edge IAB node to release or suspend the second configuration information.

Optionally, the second configuration information includes any one or more of the following items:
a backhaul adaptation protocol stack header rewrite table (BAP header rewrite table), and an IP address allocated to the edge IAB node by the target IAB donor.

The BAP header rewrite table is used for rewriting BAP header information belonging to a first topology into BAP header information belonging to a second topology, achieving data transmission through the target path. The BAP header information contains a BAP routing ID, that is, a BAP routing ID of the first topology is rewritten into a BAP routing ID of the second topology. As an example, when a downlink data packet arrives at the edge IAB node with the BAP header information belonging to Topology 2, rewriting into BAP header information belonging to Topology 1 is required at the edge IAB node; and when an uplink data packet arrives at the edge IAB node with the BAP header information belonging to Topology 1, rewriting into the BAP header information belonging to Topology 2 is required at the edge IAB node.

In the path fallback method according to the embodiments of the present disclosure, the source IAB donor, based on a determination on a load, a measurement report or the like, performs a fallback, for F1 which has been offloaded to the target path, to the source path or the else path. Upon the fallback of F1 to the source path or the else path, related configuration on the target path, which is associated with F1, can be released or suspended. If released, a resource associated with such configuration can be used for transmission of other F1 belonging to the target IAB donor, thereby improving resource utilization; if suspended, it can be achieved that F1 is migrated to the target path for a second time quickly. For example, when the source IAB donor is unstable, F1 needs to be migrated to the target path for a second time in a short term; or when the target IAB donor is in an instantaneous load peak, only a temporary fallback to the source path or the else path is needed for F1 followed by a further migration to the target path, and the suspended configuration can be quickly activated for a migration once more. In addition, the source IAB donor can give an indication to the edge IAB node to release the configuration associated with the target path, to prevent the edge IAB node from storing unnecessary information. Alternatively, it can also give an indication to the edge IAB node to suspend the configuration associated with the target path, such that, the information carried in a reconfiguration process of the edge IAB node following the further migration to the target path can be reduced.

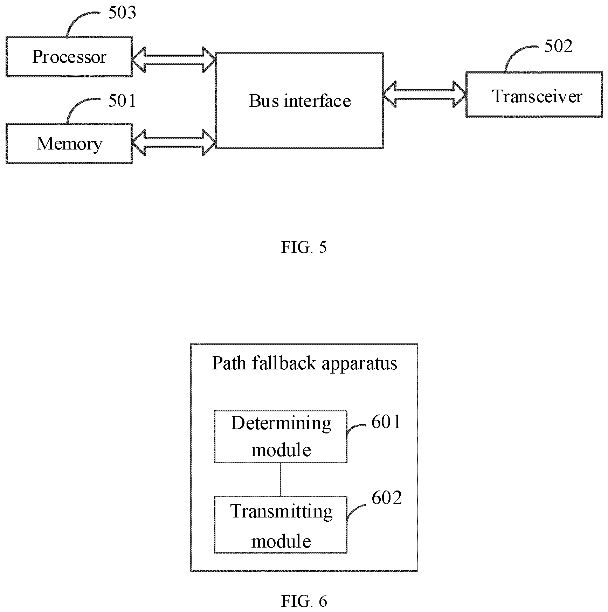

FIG. 5 is a first schematic structural diagram of a path fallback apparatus according to an embodiment of the present disclosure. As shown in FIG. 5, the apparatus includes: a memory 501, a transceiver 502 and a processor 503.

The memory 501 is configured to store a computer program;
the transceiver 502 is configured to receive or transmit data under control of the processor 503; and
the processor 503 is configured to read the computer program in the memory 501 and perform the following operations:
   determining to migrate F1 of an edge IAB node from a target path to a first path, where the first path is a source path or an else path, the source path being a path used by F1 of the edge IAB node before using the target path, and the else path being a path other than the target path and the source path; and
   transmitting indication information to a target IAB donor and/or the edge IAB node, the indication information being used to give an indication to release or suspend configuration information for transmitting, on the target path, all or part of F1 of the edge IAB node.

In an implementation, the processor 503 is specifically configured to perform the following operation:
transmitting a first message to the target IAB donor, the first message being used to give an indication to the target IAB donor to release or suspend first configuration information which is used for transmitting F1 of the edge IAB node.

In an implementation, the first message is an XnAP message.

In an implementation, the first configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In an implementation, the processor 503 is further configured to perform the following operation:
transmitting a second message to the edge IAB node, the second message being used to give an indication to the edge IAB node to release or suspend second configuration information which is used for transmitting, on the target path, F1 of the edge IAB node.

In an implementation, the second message is an RRC message, and the processor 503 is specifically configured to perform the following operation:
transmitting the second message to an MT of the edge IAB node.

In an implementation, the second message is an F1AP message, and the processor 503 is specifically configured to perform the following operation:
transmitting the second message to a DU of the edge IAB node.

In an implementation, the second configuration information includes any one or more of the following items:
a backhaul adaptation protocol stack header rewrite table, and an IP address allocated to the edge IAB node by the target IAB donor.

In an implementation, the processor 503 is configured to perform the following operation:
determining, based on at least one item of a load of a source IAB donor, a load of the target IAB donor, a load of a neighboring cell, or a measurement report of the edge IAB node, to migrate F 1 of the edge IAB node from the target path to the first path.

In an implementation, the processor 503 is configured to perform the following operations:
transmitting an RRC reconfiguration message to the edge IAB node, the RRC reconfiguration message being used for handing over the edge IAB node to an IAB parent node of the first path;
receiving an RRC reconfiguration completion message transmitted by the edge IAB node; and
configuring or activating third configuration information of each node of the first path, the third configuration information being used for transmitting F 1 of the edge IAB node.

In an implementation, the processor 503 is specifically configured to perform the following operations:
transmitting the RRC reconfiguration message to the edge IAB node through the IAB parent node of the first path; and
receiving the RRC reconfiguration completion message which is transmitted by the edge IAB node through an IAB parent node of the target path.

In an implementation, the third configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

It should be noted that the aforementioned apparatus according to the present disclosure can implement all of the method steps in the foregoing method embodiments, and achieve a same technical effect. Same contents and beneficial effects of this embodiment as those of the method embodiments will not be specifically elaborated here.

FIG. 6 is a second schematic structural diagram of a path fallback apparatus according to an embodiment of the present disclosure. As shown in FIG. 6, the apparatus includes:
a determining unit 601, configured to determine to migrate F1 of an edge IAB node from a target path to a first path, where the first path is a source path or an else path, the source path being a path used by F1 of the edge IAB node before using the target path, and the else path being a path other than the target path and the source path; and
a transmitting unit 602, configured to transmit indication information to a target IAB donor and/or the edge IAB node, the indication information being used to give an indication to release or suspend configuration information for transmitting, on the target path, all or part of F 1 of the edge IAB node.

In an implementation, the transmitting unit 602 is configured to:
transmit a first message to the target IAB donor, the first message being used to give an indication to the target IAB donor to release or suspend first configuration information which is used for transmitting F 1 of the edge IAB node.

In an implementation, the first message is an XnAP message.

In an implementation, the first configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

In an implementation, the transmitting unit 602 is configured to:
transmit a second message to the edge IAB node, the second message being used to give an indication to the edge IAB node to release or suspend second configuration information which is used for transmitting, on the target path, F1 of the edge IAB node.

In an implementation, the second message is an RRC message, and the transmitting unit 602 is configured to:
transmit the second message to an MT of the edge IAB node.

In an implementation, the second message is an F1AP message, and the transmitting unit 602 is configured to:
transmit the second message to a DU of the edge IAB node.

In an implementation, the second configuration information includes any one or more of the following items:
a backhaul adaptation protocol stack header rewrite table, and an IP address allocated to the edge IAB node by the target IAB donor.

In an implementation, the determining unit is configured to:
determine, based on at least one item of a load of a source IAB donor, a load of the target IAB donor, a load of a neighboring cell, or a measurement report of the edge IAB node, to migrate F1 of the edge IAB node from the target path to the first path.

In an implementation, the transmitting unit 602 is configured to: transmit an RRC reconfiguration message to the edge IAB node, the RRC reconfiguration message being used for handing over the edge IAB node to an IAB parent node of the first path;
the apparatus further includes: a receiving unit, configured to receive an RRC reconfiguration completion message transmitted by the edge IAB node;
the determining unit is configured to configure or activate third configuration information of each node of the first path, the third configuration information being used for transmitting F1 of the edge IAB node.

In an implementation, the transmitting unit 602 is configured to: transmit the RRC reconfiguration message to the edge IAB node through the IAB parent node of the first path; and
the receiving unit is configured to: receive the RRC reconfiguration completion message which is transmitted by the edge IAB node through an IAB parent node of the target path.

In an implementation, the third configuration information includes any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

It should be noted that the aforementioned apparatus according to the present disclosure can implement all of the method steps in the foregoing method embodiments, and achieve a same technical effect. Same contents and beneficial effects of this embodiment as those of the method embodiments will not be specifically elaborated here.

It should be noted that, in the embodiments of the present disclosure, the partition of the units, being illustrative, is only a logical function partition, and there may be other manners for partition in an actual implementation. In addition, respective functional units in the embodiments of the present disclosure may be integrated into a processing unit, or may exist alone physically, or two or more units may be integrated into one unit. The aforementioned integrated unit can be implemented in a form of hardware, or it can also be implemented in a form of a software function unit.

The aforementioned integrated unit may be stored in a processor readable storage medium if being implemented in the form of a software functional unit and sold or used as a standalone product. Based on such understanding, the technical solutions of the present disclosure, substantively, or a part of which that makes a contribution to the prior art, or the whole or a part of which, may be embodied in the form of a software product which is stored in a storage medium, where a plurality of instructions are included to cause a computer device (which can be a personal computer, a server, a network device, etc.) or a processor (processor) to execute all or part of the steps of the methods according to the various embodiments of the present disclosure. The aforementioned storage medium includes: a USB flash disk, a mobile hard disk, a read-only memory (Read-Only Memory, ROM), a random access memory (Random Access Memory, RAM), a magnetic disk or an optical disk, or other media that can store program codes.

An embodiment of the present disclosure further provides a computer readable storage medium, storing thereon a computer program, where the computer program is configured to enable a computer to implement the method according to the foregoing method embodiments.

The computer readable storage medium can be any available medium or data storage device that the computer can access, including but not limited to a magnetic memory (such as a floppy disk, a hard drive, a magnetic tape, a magneto-optical disk (MO), etc.), an optical memory (such as a CD, a DVD, a BD, an HVD, etc.), as well as a semiconductor memory (such as a ROM, an EPROM, an EEPROM, a non-volatile memory (NAND FLASH), a solid-state drive (SSD), etc.).

An embodiment of the present disclosure further provides a computer program product, including a computer program, where the computer program, when being executed by a processor, implements the method according to the foregoing method embodiments.

Those skilled in the art should understand that the embodiments of the present disclosure can be provided as a method, a system, or a computer program product. Therefore, the present disclosure can adopt the form of a complete hardware embodiment, a complete software embodiment, or an embodiment combining software and hardware aspects. Moreover, the disclosure can adopt the form of a computer program product implemented on one or more computer-usable storage media (including but not limited to a magnetic disk storage and an optical storage) containing computer-usable program codes therein.

Embodiments of the present disclosure are described with reference to flowcharts and/or block diagrams of the method, device (system) and computer program product according to the embodiments of the present disclosure. It should be understood that each flow and/or block in the flowchart and/or block diagram, and combinations of the flows and/or blocks in the flowchart and/or block diagram can be implemented by the computer executable instructions. These computer executable instructions can be provided to a processor of a general-purpose computer, a special-purpose computer, an embedded processor or other programmable data processing device to produce a machine, such that the instructions executed by the processor of the computer or other programmable data processing device produce means for implementing the functions specified in one or more flows in the flowcharts and/or one or more blocks in the block diagrams.

These processor executable instructions may also be stored in a processor-readable memory that can direct a computer or other programmable data processing device to function in a particular manner, such that the instructions stored in the processor-readable memory produce an article of manufacture including instruction means that implement the functions specified in one or more flows in the flowcharts and/or one or more blocks in the block diagram.

These computer program instructions may also be loaded onto a computer or other programmable data processing devices, such that a series of operational steps are performed on the computer or other programmable devices to produce a computer-implemented process, such that the instructions executed on the computer or other programmable devices provide steps for implementing the functions specified in one or more flows in the flowcharts and/or one or more blocks in the block diagram.

Apparently, various modifications and variations can be made to the embodiments of the present disclosure by those skilled in the art without departing from the spirit and scope of the present disclosure. Thus, if these modifications and variations of the embodiments of the present disclosure are within the scope of the claims of the present disclosure and their technical equivalents, the present disclosure is also intended to include these modifications and variations.

## Claims

1. A path fallback method, comprising:
determining to migrate F1 of an edge IAB node from a target path to a first path, wherein the first path is a source path or an else path, the source path being a path used by F1 of the edge IAB node before using the target path, and the else path being a path other than the target path and the source path; and
transmitting indication information to a target IAB donor and/or the edge IAB node, the indication information being used to give an indication to release or suspend configuration information for transmitting, on the target path, all or part of F1 of the edge IAB node.

2. The method according to claim 1, wherein the transmitting the indication information to the target IAB donor and/or the edge IAB node comprises:
transmitting a first message to the target IAB donor, the first message being used to give an indication to the target IAB donor to release or suspend first configuration information which is used for transmitting F1 of the edge IAB node.

3. The method according to claim 2, wherein the first message is an XnAP message.

4. The method according to claim 2, wherein the first configuration information comprises any one or more of the following items:
IP to Layer 2 mapping, mapping between an ingress backhaul radio link control channel and an egress backhaul radio link control channel, backhaul adaptation protocol stack routing configuration, an IP address allocated to the edge IAB node by the target IAB donor, and a backhaul radio link control channel.

5. The method according to claim 1, wherein the transmitting the indication information to the target IAB donor and/or the edge IAB node comprises:
transmitting a second message to the edge IAB node, the second message being used to give an indication to the edge IAB node to release or suspend second configuration information which is used for transmitting, on the target path, F1 of the edge IAB node.

6. The method according to claim 5, wherein the second message is an RRC message, and the transmitting the second message to the edge IAB node comprises:
transmitting the second message to an MT of the edge IAB node.

7. The method according to claim 5, wherein the second message is an F1AP message, and the transmitting the second message to the edge IAB node comprises:
transmitting the second message to a DU of the edge IAB node.

8. The method according to claim 5, wherein the second configuration information comprises any one or more of the following items:
a backhaul adaptation protocol stack header rewrite table, and an IP address allocated to the edge IAB node by the target IAB donor.

9. The method according to any one of claims 1 to 8, wherein the determining to migrate F1 of the edge IAB node from the target path to the first path comprises:
determining, based on at least one item of a load of a source IAB donor, a load of the target IAB donor, a load of a neighboring cell, or a measurement report of the edge IAB node, to migrate F1 of the edge IAB node from the target path to the first path.

10. The method according to any one of claims 1 to 8, further comprising:
transmitting an RRC reconfiguration message to the edge IAB node, the RRC reconfiguration message being used for handing over the edge IAB node to an IAB parent node of the first path;
receiving an RRC reconfiguration completion message transmitted by the edge IAB node; and
configuring or activating third configuration information of each node of the first path, the third configuration information being used for transmitting F1 of the edge IAB node.

11. The method according to claim 10, wherein the transmitting the RRC reconfiguration message to the edge IAB node comprises: transmitting the RRC reconfiguration message to the edge IAB node through the IAB parent node of the first path;
the receiving the RRC reconfiguration completion message transmitted by the edge IAB node comprises: receiving the RRC reconfiguration completion message which is transmitted by the edge IAB node through an IAB parent node of the target path.

12. The method according to claim 10, wherein the third configuration information comprises any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

13. A path fallback apparatus, comprising a memory, a transceiver and a processor;
wherein the memory is configured to store a computer program;
the transceiver is configured to receive or transmit data under control of the processor; and
the processor is configured to read the computer program stored in the memory and perform the following operations:
determining to migrate F1 of an edge IAB node from a target path to a first path, wherein the first path is a source path or an else path, the source path being a path used by F1 of the edge IAB node before using the target path, and the else path being a path other than the target path and the source path; and
transmitting indication information to a target IAB donor and/or the edge IAB node, the indication information being used to give an indication to release or suspend configuration information for transmitting, on the target path, all or part of F1 of the edge IAB node.

14. The apparatus according to claim 13, wherein the processor is specifically configured to perform the following operation:
transmitting a first message to the target IAB donor, the first message being used to give an indication to the target IAB donor to release or suspend first configuration information which is used for transmitting F1 of the edge IAB node.

15. The apparatus according to claim 14, wherein the first message is an XnAP message.

16. The apparatus according to claim 14, wherein the first configuration information comprises any one or more of the following items:
IP to Layer 2 mapping, mapping between an ingress backhaul radio link control channel and an egress backhaul radio link control channel, backhaul adaptation protocol stack routing configuration, an IP address allocated to the edge IAB node by the target IAB donor, and a backhaul radio link control channel.

17. The apparatus according to claim 13, wherein the processor is further configured to perform the following operation:
transmitting a second message to the edge IAB node, the second message being used to give an indication to the edge IAB node to release or suspend second configuration information which is used for transmitting, on the target path, F1 of the edge IAB node.

18. The apparatus according to claim 17, wherein the second message is an RRC message, and the processor is specifically configured to perform the following operation:
transmitting the second message to an MT of the edge IAB node.

19. The apparatus according to claim 17, wherein the second message is an F1AP message, and the processor is specifically configured to perform the following operation:
transmitting the second message to a DU of the edge IAB node.

20. The apparatus according to claim 17, wherein the second configuration information comprises any one or more of the following items:
a backhaul adaptation protocol stack header rewrite table, and an IP address allocated to the edge IAB node by the target IAB donor.

21. The apparatus according to any one of claims 13 to 20, wherein the processor is configured to perform the following operation:
determining, based on at least one item of a load of a source IAB donor, a load of the target IAB donor, a load of a neighboring cell, or a measurement report of the edge IAB node, to migrate F1 of the edge IAB node from the target path to the first path.

22. The apparatus according to claim 21, wherein the processor is configured to perform the following operations:
transmitting an RRC reconfiguration message to the edge IAB node, the RRC reconfiguration message being used for handing over the edge IAB node to an IAB parent node of the first path;
receiving an RRC reconfiguration completion message transmitted by the edge IAB node; and
configuring or activating third configuration information of each node of the first path, the third configuration information being used for transmitting F1 of the edge IAB node.

23. The apparatus according to claim 22, wherein the processor is specifically configured to perform the following operations:
transmitting the RRC reconfiguration message to the edge IAB node through the IAB parent node of the first path; and
receiving the RRC reconfiguration completion message which is transmitted by the edge IAB node through an IAB parent node of the target path.

24. The apparatus according to claim 22, wherein the third configuration information comprises any one or more of the following items:
IP to Layer 2 mapping, mapping between an ingress backhaul radio link control channel and an egress backhaul radio link control channel, backhaul adaptation protocol stack routing configuration, an IP address allocated to the edge IAB node by the target IAB donor, and a backhaul radio link control channel.

25. A path fallback apparatus, comprising:
a determining unit, configured to determine to migrate F1 of an edge IAB node from a target path to a first path, wherein the first path is a source path or an else path, the source path being a path used by F1 of the edge IAB node before using the target path, and the else path being a path other than the target path and the source path; and
a transmitting unit, configured to transmit indication information to a target IAB donor and/or the edge IAB node, the indication information being used to give an indication to release or suspend configuration information for transmitting, on the target path, all or part of F 1 of the edge IAB node.

26. The apparatus according to claim 25, wherein the transmitting unit is configured to:
transmit a first message to the target IAB donor, the first message being used to give an indication to the target IAB donor to release or suspend first configuration information which is used for transmitting F 1 of the edge IAB node.

27. The apparatus according to claim 26, wherein the first configuration information comprises any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

28. The apparatus according to claim 25, wherein the transmitting unit is configured to:
transmit a second message to the edge IAB node, the second message being used to give an indication to the edge IAB node to release or suspend second configuration information which is used for transmitting, on the target path, F1 of the edge IAB node.

29. The apparatus according to claim 28, wherein the second configuration information comprises any one or more of the following items:
a backhaul adaptation protocol stack header rewrite table, and an IP address allocated to the edge IAB node by the target IAB donor.

30. The apparatus according to any one of claims 25 to 29, wherein the transmitting unit is configured to:
transmit an RRC reconfiguration message to the edge IAB node, the RRC reconfiguration message being used for handing over the edge IAB node to an IAB parent node of the first path;
the apparatus further comprises: a receiving unit, configured to receive an RRC reconfiguration completion message transmitted by the edge IAB node;
the determining unit is configured to configure or activate third configuration information of each node of the first path, the third configuration information being used for transmitting F1 of the edge IAB node.

31. The apparatus according to claim 30, wherein the third configuration information comprises any one or more of the following items:
IP to Layer 2 mapping, mapping between an ingress backhaul radio link control channel and an egress backhaul radio link control channel, backhaul adaptation protocol stack routing configuration, an IP address allocated by the target IAB donor to the edge IAB node, and a backhaul radio link control channel.

32. A computer readable storage medium, storing thereon a computer program, wherein the computer program is configured to enable a computer to implement the method according to any one of claims 1 to 20.

33. A computer program product, comprising a computer program, wherein the computer program, when being executed by a processor, implements the method according to any one of claims 1 to 12.
